# EUROPEAN PATENT SPECIFICATION

(11) **EP 0 975 078 B1**
(45) Date of publication and mention of the grant of the patent: **26.09.2007**
(21) Application number: 99108828.7
(22) Date of filing: 04.05.1999
(51) Int. Cl.: H02G 3/08

(54) **Protective enclosure for electrical apparatuses**
Schutzgehaüse für elektrische Geräte
Boîtier de protection pour appareillages électriques

(30) Priority: 21.07.1998 IT PN980053
(43) Date of publication of application: 26.01.2000
(73) Proprietor: Hager-Lumetal S.p.A., 33080 Porcia, Pordenone (IT)
(72) Inventor: Vendrametto, Maurizio, 33080 Porcia, Pordenone (IT); Dal Santo, Roberto, 33080 Roveredo in Piano, Pordenone (IT)
(74) Representative: Agostini, Agostino

(56) References cited:
- WO-A-96/24183
- DE-U- 1 812 666
- US-A- 2 611 460
- US-A- 4 135 633
- US-A- 5 682 017

## Description

The present invention refers to an enclosure intended for housing electrical apparatuses.

The IEC 529 Publication issued by the International Electrotechnical Commission contains provisions calling for electrical apparatuses to be protected by appropriate enclosures against various external influences, as well as against direct contact therewith from any direction whatsoever. Such enclosures are classified according to the extent of protection they are able to afford, which is defined in the above cited Publication as the "level of protection, as verified by means of standard test methods, against the access [by people and animals] to dangerous parts [ie. live parts], the penetration of solid foreign bodies and/or the penetration of water".

In particular, although not solely, the enclosure according to the present invention is capable of ensuring a very high level of protection, coded as "IP 55" in the above cited Publication, to the electrical apparatus housed therein, since it is adapted to "prevent dangerous parts to be reached with a wire having a minimum diameter of 1.0 millimeters" and to "protect the electrical apparatus housed in its interior against dust and water jets sprayed from any direction whatsoever".

An enclosure with such a high level or degree of protection is usually manufactured starting from five metal walls having a square or rectangular shape (which are intended to form the bottom, top, right-hand and left-hand side walls, in addition to the rear or back one) which are then joined to each other by means of welded joints along their edges appropriately folded at right angle and with their corners cut away. The enclosure is finally completed by the addition of a front door, hinged on to one of the side walls.

An enclosure of the above cited kind is usually pre-fabricated and then carried to the installation site thereof, where it is frequently hanged on to a wall, in order to complete the electric connections of the electrical apparatuses protected by it (which are attached to the back wall of the enclosure) both to each other and the remaining parts of the electrical installation. For this reason, at least one of the walls of the enclosure, ie. the bottom one, is provided with an aperture for enabling the electric connecting cables to pass therethrough.

A major drawback of such pre-fabricated enclosures lies in the clear difficulty incurred by any electrician when carrying out such connections, in particular when their number is quite high, ie. there are a real lot of connections to carry out. Furthermore, owing to such a high numbr of welded joints required, the manufacturing cost of an enclosure of this kind has the negative peculiarity of being quite expensive.

US 5,682,017 discloses a protective enclosure for electrical apparatus having the shape of substantially a parallelepiped, wherein an aperture is provided in at least a face of said enclosure for the connection cables to pass therethrough. The perimetrical walls and/or the back wall of the enclosure are provided with elastically deformable portions adapted to be joined to each other by snap-fitting together. However, the joining elements are arranged along two lateral sides of the enclosure, so as the back wall needs to be conveniently shaped with raised channel shaped ribs extending from one side to the other of the back wall to be engaged by a pair of up-turned flanges, in order to ensure a firm locking of the enclosure.

It therefore woud be desirable, and actually is a purpose of the present invention to provide an enclosure that, while of course ensuring full compliance with the applying safety provisions, and in particular with the ones defining the "IP 55" level of protection, makes it very convenient for the electrician, ie. the installer, to carry out the electric connections.

A further purpose of the present invention is to provide an enclosure which is capable of being even assembled by the electrician, ie. the installer, directly on the installation site thereof and which, in any case, has a reduced cost.

These and other aims accfording to the present invention can be reached in an enclosure having the features as recited in the appended claims, as this will more clearly emerge from the description of a preferred embodiment of the present invention, which is given below by way of non-limiting example with reference to the accompanying drawings, in which:
- Figure 1 is a simplified three-dimensional view of an enclosure for electrical apparatuses;
- Figure 2 is a vertical-section view of the above enclosure along the II-II plane of Figure 1;
- Figure 3 is a similar view as Figure 2. however limited to some details thereof.

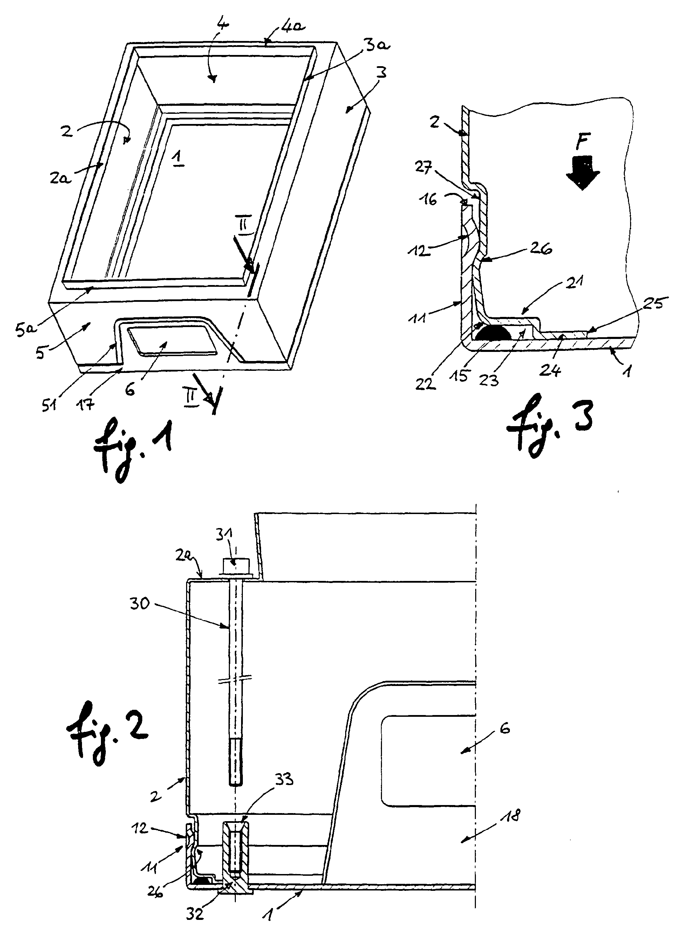

As illustrated in Figure 1, according to the present invention an enclosure in the shape of a parallelepipedon and adapted to protect electrical apparatuses with a "IP 55" degree or level of protection comprises, further to a back wall 1 adapted to support the electrical apparatuses (not shown), a left-hand side wall 2, a right-hand side wall 3, a top wall 4 and a bottom wall 5, in addition to a front door (not shown) that may for instance be hinged on to the left-hand side wall 2. In a preferred embodiment, the perimetrical walls 2, 3, 4, 5 are obtained in a particularly simple and cost-effective manner from a single metal plate, for instance of steel, which is appropriately folded to a box-like shape and butt-welded in correspondence of an edge thereof. Each one of said perimetrical walls is provided frontally with a L-shaped folded portion, as indicated at 2a, 3a, 4a, 5a, respectively, which is intended to act as an abutment for a generally per sè known door (not shown) used to shut the enclosure.

For ensuring the passage of the electric cables used to connect to each other the apparatuses protected by the enclosure and the remaining parts of the electric installation, the bottom wall of the enclosure is provided with an aperture 6 which the present invention teaches to advantageously make according to the description given farther on.

The metal plate, for instance of steel, which forms the back wall 1 is peripherally provided on each side with a substantially L-shaped folded portion which, according to the invention, is in turn provided with a pair of bulges. For reasons of greater simplicity, Figures 2 and 3 only show such a folded portion 11 of the left-hand side of the back wall 1 and, near the free edge 16 thereof, a bulge 12 which expands towards the interior of the enclosure. It will however be appreciated that what is being described here equally applies to all other sides of said back wall 1.

Again, each one of the perimetrical walls of the enclosure, in particular the left-hand side wall 2 (the only one that is illustrated in Figures 2 and 3), is in turn provided along its rear side with a wing 21 that is folded into a substantially L-shape.

To be more precise, said wing 21 starts from the folding edge 22 of the wall 2 with a portion 23 that is re-entering with respect to a remaining portion 24 extending up to the free edge 25 thereof. At a given distance past the folding edge 22, the wall 2 is provided with a step 26 defining the edge of a recess 27 extending along the whole length of the wall.

All that it takes to complete the enclosure (wherein for reasons of greater simplicity the description is intentionally limited here to the sole mutual connection of the walls 1 and 2) is to first clamp the back wall 1 in position so as to have its folded portion 11 exposed to view, and then push the left-hand side wall 2 in the direction shown by the arrow F in Figure 3 so that, owing to the interference between the bulge 12 and the step 26, an elastic deformation is brought about, which ultimately leads to said two walls snap-fitting together as soon as the bulge 12 slides into the bottom of the recess 27 and, at the same time, the portion 24 of the wing 21 abuts against the inner surface 13 of the back wall 1 of the enclosure.

Through an appropriate selection of the gauges of the metal sheets used to manufacture the walls, in the above described manner it is therefore possible to obtain a self-bearing enclosure. The same result can of course be obtained even if the perimetrical walls and/or the back wall of the enclosure are made out of any suitable engineering plastics or similar material.

In order to enable the enclosure to ensure as high a level of protection as the "IP 55" one to the electrical apparatus housed therewithin, before starting the afore described operation, a water-tightly sealing gasket 15 made of polymeric material is suitably applied on the inner surface 13 of the back wall 1, near the folding edge 14, so as to enable it to ensure a water-tight sealing effect by expanding into the re-entering portion 23 of the wing 21. As an alternative solution, the same re-entering portion 23 of the wing 21 may be used to accomodate an adhesive material, preferably a silicone sealant, which also contributes to an improved structural strength of the enclosure.

As illustrated in Figure 2, the enclosure according to the present invention may in an advantageous manner be completed by (per sè known) fastening screws 30 which would in this case most properly accurately secure on all sides the elastic deformation that keeps the perimetrical walls 2, 3, 4 and 5 joined to the back wall 1.

To this purpose, the back wall 1 is provided, near each corner thereof, with an aperture adapted to accomodate a short rigid member 32, which is generally known as "pillar" in the art (see Figure 2), which has frontally a threaded seat 33 to accomodate the screw 30 whose head 31 is retained by the front folded portion 2a of the left-hand side wall 2. It can be easily appreciated that, when tightened down in its seat 33, said screw 30 practically secures the interference between the bulge 12 and the step 26 that brings about the desired elastic deformation.

The same Figure 2 further illustrates an embodiment of the present invention which proves to be particularly advantageous in those cases in which the enclosure has to be hanged on a wall of the installation site and must therefore be open on its lower side in order to allow for the electrical connection cables to pass therethrough.

The central portion of the folding 17 on the lower side of the back wall 1 has an appendix 18 that extends forward so as to include the afore mentioned aperture 6 for the cables to pass therethrough. The bottom wall 5 of the enclosure is in turn provided with a cut-away portion 51 (see Figure 1) that mates with the edge of the appendix 18 and allows for a sealing gasket (not shown) to be inserted therein.

This particular feature of the present invention makes it still more convenient for the electrician, ie. the installer to do his work at the installation site, in that he is actually able to carry out the totality of the required electrical connections on the sole back wall 1 of the enclosure, ie. before starting to assembly the perimetrical walls and the shutting door of the same enclosure.

Conclusively it can therefore be stated that an enclosure according to the present invention positively has following advantages, which are particularly appreciable in all those cases in which as high a degree of protection as the afore mentioned "IP 55" one needs to be assured:
a) the enclosure may be assembled directly on the site of its installation, even by an electrician, by making use of component parts that are delivered in the form of an assembly kit;
b) the manufacturing cost is linited owing to the enclosure being pratically formed by relatively simple parts that integrally include a substantial part of the means needed for mutual joining;
c) when the enclosure is manufactured starting from metal plates, the walls thereof are abotained by means of simple shearing and folding operations;
d) in the above case, welded joints are reduced to a minimum, ie. to the butt-welding required along an edge of the plate from which the four perimetrical walls of the enclosure are obtained.

Although the above description has been given with reference to a preferred embodiment of the present invention, it will be appreciated that it is well within the ability of all those skilled in the art to use the teachings and the principles of the present invention to develop a number of other possible variants to the above cited embodiment.

## Claims

1. Protective enclosure for electrical apparatus having the shape of substantially a parallelepiped wherein an aperture (6) is provided with at least a face of said enclosure for the connection cables to pass therethrough, wherein the perimetrical walls (2,3,4,5) and/or the back wall (1) of said enclosure are provided with elastically deformable portions (26,11) adapted to be joined to each other by snap-fitting together,
**characterized in that**
it comprises at least a front door,
each perimetrical wall (2,3,4,5) of the enclosure is provided along its rear side with a wing (21), extending in a substantially parallel manner with respect to the back wall (1) and including a portion (24),
each one of said perimetrical wall (2,3,4,5) includes a step-like configuration (26) that defines an edge of a recess (27) arranged at a certain distance from the folding edge (22) of the wing (21),
the back wall (1) is peripherally provided on each side with a substantially L-shaped folded portion (11), which is provided with a pair of inwards extending bulges (12), arranged near the free edge (16) thereof, wherein
said perimetrical walls (2,3,4,5) and said back wall (1) are constructed in such a manner that, by pushing the perimetrical wall(2,3,4,5) towards the back wall, an elastic deformation is brought about, which ultimately leads to said walls snap-fitting together as soon as the bulge (12) slides into the bottom of the recess (27) and, at the same time, said portion (24) of the wing (21) abuts against an inner surface of the back wall(1).

2. Protective enclosure for electrical apparatus according to claim 1, **characterized in that** in the joining zones between each one of said perimetrical walls (2, 3, 4, 5) and the back wall (1), preferably in a portion (23) of said wing (21) that starts from the folding edge (22) and is re-entrant with respect to the remaining portion (24) extending up to the free edge (25), the possibility is given to apply a water-tightly sealing gasket (15), preferably of polymeric material.

3. Protective enclosure for electrical apparatus according to claim 1, **characterized in that** in the joining zones between each one of said perimetrical walls (2, 3, 4, 5) and the back wall (1), preferably in a portion (23) of said wing (21) that starts from the folding edge (22) and is re-entrant with respect to the remaining portion (24) extending up to the free edge (25), the possibility is given to apply an adhesive material, preferably a silicone-based sealant.

4. Protective enclosure for electrical apparatus according to any of the preceding claims, **characterized in that**, in a per se known manner, it comprises a plurality of screws (30) whose head (31) retainingly engages a front folding of one of said perimetrical walls (2, 3, 4, 5), wherein said screws are adapted to be tightened down into a seat (33) provided with a per sè known rigid element (32) that is fixed to the back wall (1).

5. Protective enclosure for electrical apparatus according to any of the preceding claims, **characterized in that** all perimetrical walls (2, 3, 4, 5) are obtained from a single metal plate that is folded into a box-like shape and butt-welded in correspondence of an edge thereof.

## Patentansprüche

1. Schutzgehäuse für elektrische Geräte mit im Wesentlichen der Form eines Parallelepipedon, wobei eine Öffnung (6) mit wenigstens einer Fläche des Gehäuses versehen ist, um die Verbindungskabel dort hindurch zu führen, wobei die Außenwände (2, 3, 4, 5) und/oder die Rückwand (1) des Gehäuses mit elastisch verformbaren Bereichen (26, 11) versehen sind, die angepasst sind, um miteinander durch Einrasten zusammen verbunden zu werden,
**dadurch gekennzeichnet, dass**
- es wenigstens eine Vordertür umfasst,
- jede Außenwand (2, 3, 4, 5) des Gehäuses entlang seiner Rückseite mit einem Flügel (21) versehen ist, der sich in einer im Wesentlichen parallelen Weise mit Bezug auf die Rückwand (1) erstreckt und einen Bereich (24) aufweist,
- jede der Außenwände (2, 3, 4, 5) eine stufenähnliche Konfiguration (26) aufweist, die einen Rand einer Aussparung (27) definiert, die in einem bestimmten Abstand von der Falzkante (22) des Flügels (21) angeordnet ist,
- die Rückwand (1) im Umfang an jeder Seite mit einem im Wesentlichen L-förmigen Bereich (11) versehen ist, der mit einem Paar sich nach innen erstreckender Vorwölbungen (12) versehen ist, die in der Nähe von dessen freiem Rand (16) angeordnet sind, wobei
- die Außenwände (2, 3, 4, 5) und die Rückwand (1) in einer solchen Weise aufgebaut sind, dass durch Drücken der Außenwand (2, 3, 4, 5) zur Rückwand eine elastische Verformung hervorgerufen wird, die schließlich dazu führt, dass die Wände zusammen einrasten, sobald die Vorwölbung (12) in den Boden der Aussparung (27) gleitet und zur gleichen Zeit der Bereich (24) des Flügels (21) gegen die innere Oberfläche der Rückwand (1) stößt.

2. Schutzgehäuse für elektrische Geräte nach Anspruch 1,
**dadurch gekennzeichnet, dass**
in den Verbindungszonen zwischen jeder der Außenwände (2, 3, 4, 5) und der Rückwand (1) vorzugsweise ein Bereich (23) von dem Flügel (21), der von der Falzkante (22) beginnt und mit Bezug auf den übrigen Bereich (24), der sich bis zum freien Rand (25) erstreckt, einspringend ist, die Möglichkeit gegeben ist, ein wasserdichtes Dichtungsprofil (15), vorzugsweise aus Polymer-Material aufzubringen.

3. Schutzgehäuse für elektrische Geräte nach Anspruch 1,
**dadurch gekennzeichnet, dass**
in den Verbindungszonen zwischen jeder der Außenwände (2, 3, 4, 5) und der Rückwand (1) vorzugsweise ein Bereich (23) von dem Flügel (21), der von der Falzkante (22) beginnt und mit Bezug auf den übrigen Bereich (24), der sich bis zum freien Rand (25) erstreckt, einspringend ist, die Möglichkeit gegeben ist, ein Klebstoffmaterial, vorzugsweise ein auf Silikon basierendes Dichtungsmittel aufzubringen.

4. Schutzgehäuse für elektrische Geräte nach einem der vorhergehenden Ansprüche,
**dadurch gekennzeichnet, dass**
es in einer an sich bekannten Weise mehrere Schrauben (30) umfasst, deren Kopf (31) mit einem vorderen Falz von einer der Außenwände (2, 3, 4, 5) festhaltend in Eingriff kommt, wobei die Schrauben angepasst sind, um in einen mit einem an sich bekannten starren Element (32) versehenen Sitz festgezogen zu werden, der an der Rückwand (1) fixiert ist.

5. Schutzgehäuse für elektrische Geräte nach einem der vorhergehenden Ansprüche,
**dadurch gekennzeichnet, dass**
alle Außenwände (2, 3, 4, 5) aus einer einzelnen Metallplatte gewonnen werden, die in eine kastenähnliche Form gefaltet und entsprechend einem Rand davon stumpfgeschweißt wird.

## Revendications

1. Boîtier de protection pour appareillage électrique ayant la forme essentiellement d'un parallélépipède dans lequel une ouverture (6) est prévue dans au moins une face dudit boîtier pour que des câbles de connexion passent à travers celle-ci, dans lequel les parois périmétriques (2,3,4,5) et/ou la paroi arrière (1) dudit boîtier sont équipées de portions élastiquement déformables (26,11) adaptées pour être reliées l'une à l'autre en les ajustant ensemble par fixation encliquetable,
**caractérisé en ce que**
il comprend au moins une porte avant,
chaque paroi périmétrique (2,3,4,5) du boîtier est équipée le long de son côté arrière d'une aile (21), s'étendant d'une manière essentiellement parallèle par rapport à la paroi arrière (1) et incluant une portion (24),
chacune desdites parois périmétriques (2,3,4,5) inclut une configuration de type marche (26) qui définit un bord d'un renfoncement (27) disposé à une certaine distance du bord de pliage (22) de l'aile (21),
la paroi arrière (1) est équipée en périphérie de chaque côté d'une portion (11) pliée essentiellement en forme de L, qui est équipée d'une paire de renflements (12) s'étendant vers l'intérieur, disposés près du bord libre (16) de celle-ci, dans lequel
lesdites parois périmétriques (2,3,4,5) et ladite paroi arrière (1) sont construites de manière à ce que, en poussant la paroi périmétrique (2,3,4,5) en direction de la paroi arrière, une déformation élastique est provoquée, ce qui conduit finalement à ce que lesdites parois s'ajustent ensemble par fixation encliquetable dès que le renflement (12) glisse au fond du renfoncement (27) et, en même temps, que ladite portion (24) de l'aile (21) est en butée contre une surface intérieure de la paroi arrière (1).

2. Boîtier de protection pour appareillage électrique selon la revendication 1, **caractérisé en ce que** dans les zones de liaison entre chacune des dites parois périmétriques (2,3,4,5) et la paroi arrière (1), de préférence dans une portion (23) de ladite aile (21) qui part du bord de pliage (22) et est rentrante par rapport à la portion restante (24) qui s'étend jusqu'au bord libre (25), il est donné la possibilité d'appliquer un joint d'étanchéité hermétique à l'eau (15), de préférence en matériau polymère.

3. Boîtier de protection pour appareillage électrique selon la revendication 1, **caractérisé en ce que** dans les zones de liaison entre chacune des dites parois périmétriques (2,3,4,5) et la paroi arrière (1), de préférence dans une portion (23) de ladite aile (21) qui part du bord de pliage (22) et est rentrante par rapport à la portion restante (24) qui s'étend jusqu'au bord libre (25), il est donné la possibilité d'appliquer un matériau adhésif, de préférence un produit d'étanchéité à base de silicone.

4. Boîtier de protection pour appareillage électrique selon l'une quelconque des revendications précédentes, **caractérisé en ce que**, d'une manière connue en tant que telle, il comprend une pluralité de vis (30) dont la tête (31) s'engage de manière à être retenue dans un pli avant d'une desdites parois périmétriques (2,3,4,5), dans lequel lesdites vis sont adaptées pour être serrées vers le bas dans un support (33) équipé d'un élément rigide (32) connu en tant que tel qui est fixé à la paroi arrière (1).

5. Boîtier de protection pour appareillage électrique selon l'une quelconque des revendications précédentes, **caractérisé en ce que** toutes les parois périmétriques (2,3,4,5) sont obtenues à partir d'une seule plaque de métal qui est pliée en forme de type boite et soudée bout à bout en correspondance avec un bord de celle-ci.
